# FASCICULE DE BREVET EUROPEEN

(11) **EP 2 475 577 B1**
(45) Date de publication et mention de la délivrance du brevet: **04.05.2016**
(21) Numéro de dépôt: 10751941.5
(22) Date de dépôt: 08.09.2010
(51) Int. Cl.: B64C 31/036, B64D 17/02, B64D 17/10, D03D 15/00

(54) **VOILE DE VOL, NOTAMMENT VOILE DE PARAPENTE**
STOFFFLÜGEL, INSBESONDERE FÜR GLEITSCHIRME
FABRIC WING FOR PARAGLIDERS

(30) Priorité: 11.09.2009 FR 0956263
(43) Date de publication de la demande: 18.07.2012
(73) Titulaire: Porcher Industries, 38300 Badinières (FR)
(72) Inventeur: FAUQUIGNON, Eric, 43260 Lantriac (FR)
(74) Mandataire: Grand, Guillaume
(86) Numéro de dépôt international: PCT/EP2010/063188
(87) Numéro de publication internationale: WO 2011/029851

(56) Documents cités:
- DE-A1-102005 052 333
- DE-U1- 8 707 788

## Description

La présente invention concerne une voile de vol.

L'invention s'intéresse en particulier, mais de manière non exclusive, aux voiles de parapente.

Les voiles de parapente doivent concilier, entre autres, légèreté et résistance mécanique. Ainsi, ces voiles sont généralement constituées de pièces, assemblées les unes aux autres, d'un tissu formé de fils de chaîne et de trame individuellement identiques les uns aux autres. Une forme de réalisation classique est de réaliser ce tissu avec des fils de chaîne et de trame en nombres de fils sensiblement identiques et dont le titre vaut 33 dtex.

Un exemple d'un tel tissu est par exemple décrit dans le document DE-A1-10 2005 052 333.

J Le but de la présente invention est de proposer une voile de vol, notamment de parapente, dont la légèreté du tissu est améliorée, tout en conservant de bonnes performances mécaniques de résistance.

A cet effet, l'invention a pour objet une voile de vol, telle qu'une voile de parapente, comprenant un tissu formé de fils de chaîne et de trame continus, dans laquelle, lorsque la voile est en vol, les projections, dans un plan horizontal, de premiers fils que sont soit les fils de chaîne, soit les fils de trame, s'étendent parallèlement à la direction antéro-postérieure de la voile tandis que les projections, dans le plan horizontal, des seconds fils que sont respectivement soit les fils de trame, soit les fils de chaîne, s'étendent parallèlement à la direction latérale de la voile,
caractérisée en ce que la résistance à la déformation du tissu selon ses seconds fils est plus élevée que celle du tissu selon ses premiers fils.

L'idée à la base de l'invention est de sortir du « schéma » isotrope des tissus dont les fils de trame et de chaîne sont prévus avec des nombres de fils égaux et qui sont individuellement identiques les uns aux autres, pour proposer un tissage dont la résistance soit en sens trame, soit en sens chaîne, est plus grande que la résistance, respectivement, soit en sens chaîne, soit en sens trame. En fait, l'invention met à profit le constat selon lequel, en service, une voile de vol, telle qu'une voile de parapente, subit des contraintes mécaniques plus grandes selon sa direction latérale, c'est-à-dire sa direction « gauche-droite », que selon sa direction antéro-postérieure, c'est-à-dire sa direction « avant-arrière » : l'invention prévoit, en quelque sorte, tout en restant éloigné de la zone de rupture, de disposer de fils ou d'une configuration (agencement) de fils s'étendant selon la direction antéro-postérieure de la voile dont on a diminué la résistance à la déformation par rapport à celle des fils ou de la configuration de fils qui, voile en vol, s'étendent selon la direction latérale de la voile. Cela permet d'alléger le tissu, sans pour autant faire courir un risque d'endommagement, notamment de déchirure, de ce tissu dans des conditions normales d'utilisation.

Un premier mode de réalisation conforme à l'invention consiste à abaisser le poids de fils dans la direction latérale par une dissymétrie des résistances à la déformation (ténacité) respectives des fils de trame et de chaîne. Comme expliqué en détail plus loin, cette dissymétrie peut être réalisée au niveau des titres des fils de trame et de chaîne. D'autres formes de réalisation, liées par exemple à des natures de matériaux différentes pour les fils de trame et pour les fils de chaîne, sont envisageables.

Un second mode de réalisation conforme à l'invention repose sur des nombres de fils de trame et de fils de chaîne différents au sein du tissu, comme expliqué en détail plus loin.

Bien entendu, les diverses formes de réalisation de l'invention peuvent être aussi bien considérées isolément qu'en combinaison, partielle ou totale, pour obtenir l'anisotropie recherchée pour le tissu selon l'invention.

Les contraintes mécaniques s'exerçant sur le tissu d'une voile, en condition d'utilisation normale, ne peuvent être mesurées facilement. Les calculs théoriques indiquent des niveaux de l'ordre de 10 à 40 N/mm². En pratique et par souci de facilité, on caractérise la résistance mécanique tant d'un tissu que de chacun des ces fils, de manière précise, à partir de sa résistance à la rupture en utilisant la norme ISO 1421. Eu égard au domaine de l'invention, à savoir les voiles de vol, la résistance à la rupture minimale pour les tissus neufs concernés ici est d'au moins 25 daN/5 cm.

Suivant des caractéristiques avantageuses de la voile de vol conforme à l'invention, prises isolément ou selon toutes les combinaisons techniquement possibles :
- la résistance à la déformation du tissu selon ses seconds fils est supérieure de 10%, de préférence 25%, à celle du tissu selon ses premiers fils ;
- les premiers et seconds fils sont réalisés avec le même matériau, et en ce que le titre d'au moins certains des seconds fils est strictement supérieur à celui de chaque premier fil ;
- les titres des seconds fils et des premiers fils sont respectivement compris entre 30 dtex et 36 dtex, et entre 19 dtex et 26 dtex ;
- les titres respectifs des seconds fils et des premiers fils sont égaux à 33 dtex et 22 dtex ;
- les premiers et seconds fils sont respectivement réalisés en des matériaux différents ;
- le nombre des seconds fils du tissu est strictement supérieur au nombre des premiers fils ;
- pour des premiers et seconds fils réalisés avec le même matériau et présentant le même titre, le nombre des seconds fils est compris entre 35 et 55 fils/cm tandis que le nombre des premiers fils est compris entre 30 et 50 fils/cm ;

L'invention a également pour objet un parapente comportant une voile telle que définie ci-dessus.

L'invention sera mieux comprise à la lecture de la description qui va suivre, donnée uniquement à titre d'exemple et faite en se référant aux dessins sur lesquels :
- la figure 1 est une vue schématique en perspective d'un parapente ; et
- la figure 2 est une vue schématique à plus grande échelle d'un tissu appartenant au parapente de la figure 1, observé selon la flèche Il de la figure 1.

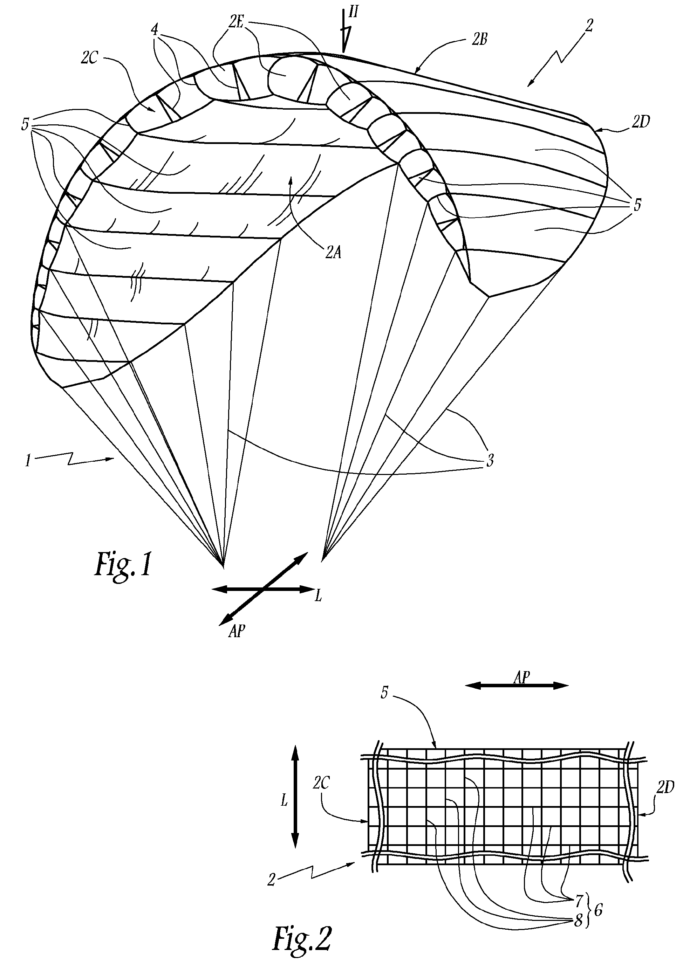

Sur la figure 1 est représenté un parapente 1 comprenant une voile de vol 2 et des suspentes 3 reliant la voile 2 à des moyens, non représentés, de pilotage du parapente par un pilote Pour des raisons de visibilité, toutes les suspentes 3 ne sont pas représentées sur la figure 1, étant entendu que les aménagements relatifs à ces suspentes ainsi qu'aux moyens de pilotage précités sont bien connus dans la technique.

La voile 2 est conçue pour, lorsqu'elle est en vol, c'est-à-dire soumise à l'action du vent et des couches d'air atmosphériques, progresser normalement vers l'avant suivant une direction sensiblement rectiligne, définissant ainsi une direction antéro-postérieure AP, comme indiqué par une double flèche correspondante sur les figures. De plus, la voile 2 permet, moyennant des actions ad hoc sur les suspentes 3 par le pilote, de s'écarter de la direction antéro-portérieure AP soit vers la gauche, soit vers la droite, ce qui définit une direction latérale L qui, comme montré sur les figures, s'étend dans un plan horizontal perpendiculairement à la direction AP.

De manière classique, la voile 2 présente un intrados 2A et un extrados 2B. A l'avant de la voile, l'intrados 2A et l'extrados 2B sont reliés par un bord d'attaque 2C tandis que, à l'arrière de la voile, l'intrados et l'extrados se rejoignent pour former un bord de fuite 2D. Entre l'intrados et l'extrados sont délimités des caissons antéro-postérieurs 2E, qui débouchent vers l'avant sur le bord d'attaque 2C et qui sont séparés deux à deux, suivant la direction latérale, par des parois inter-caissons 4.

Les composants de la voile 2, en particulier son intrados 2A, son extrados 2B et ses parois inter-caissons 4, sont constitués de pièces de tissu 5, assemblées fixement les unes aux autres, notamment par couture. Chaque pièce 5 est ainsi constituée essentiellement, voire exclusivement, par un tissu 6 montré de manière schématique sur la figure 2.

Ce tissu 6 est formé de fils de chaîne continus 7 et de fils de trame continus 8, ces fils de chaîne et de trame étant entrelacés selon des techniques traditionnelles de tissage. A titre d'exemple, le maillage du tissu 6 est carré. Ce tissu peut être de type ripstop, c'est-à-dire intégrant des fils de renfort pour améliorer la performance d'anti-déchirure du tissu.

L'assemblage des pièces 5 est prévu pour que, au sein de la voile 2, les fils de chaîne 7 s'étendent en longueur selon la direction antéro-postérieure AP de la voile, tandis que les fils de trame 8 s'étendent en longueur selon la direction latérale L, comme montré sur la figure 2. Autrement dit, en projection dans un plan horizontal, les fils de chaîne 7 et de trame 8 s'étendent respectivement de manière parallèle à la direction antéro-postérieure AP et à la direction latérale L, et ce aussi bien pour le tissu des pièces 5 appartenant à l'intrados 2A et à l'extrados 2B, que pour le tissu des pièces constituant les parois inter-caissons 4.

Selon une première forme de réalisation, les fils de chaîne 7 et de trame 8 sont réalisés avec un même matériau, synthétique ou artificiel, qui peut notamment être du polyamide, de préférence du polyamide 6.6 (PA 6.6, nylon 6.6), du polyester ou de la viscose.

De plus, les titres respectifs de chaque fil de chaîne 7 et de chaque fil de trame 8 sont prévus différents l'un de l'autre : le titre des fils de trame 8 est prévu strictement supérieur à celui des fils de chaîne 7.

A titre d'exemples de mise en oeuvre :
- pour des fils de chaîne 7 ayant un titre de 33 dtex, les fils de trame 8 présentent un titre de 44 ou 50 dtex ;
- pour des fils de chaîne 7 ayant un titre de 22 dtex, les fils de trame 8 présentent un titre de 33, 44 ou 50 dtex ; et
- pour des fils de chaîne 7 ayant un titre de 15 dtex, les fils de trame 8 présentent un titre de 22, 33, 44 ou 50 dtex.

D'autres exemples de mise en oeuvre consistent à prévoir des titres panachés dans un même sens. Ainsi, pour des fils de chaîne 7 ayant tous un titre de 22 dtex, certains fils de trame 8 présentent un titre de 22 dtex tandis que le titre des autres fils de trame est 33 et/ou 44 dtex. Un autre exemple consiste en ce que, pour des fils de chaîne 7 ayant tous un titre de 33 dtex, certains fils de trame 8 présentent un titre de 33 dtex tandis que le titre des autres fils de trame est 44 et/ou 50 dtex. Dans ce cas, dans le sens trame, les plus gros fils sont utilisés soit comme des fils de fond, soit comme des fils de renfort de ripstop.

De manière plus générale, pour des fils de chaîne 7 présentant un titre compris entre 15 et 29 dtex, de préférence entre 19 et 26 dtex, au moins certains des fils de trame 8 présentent un titre compris entre 27 et 40 dtex, de préférence entre 30 et 36 dtex. Et pour des fils de chaîne 7 présentant un titre compris entre 27 et 40 dtex, au moins certains des fils de trame 8 présentent un titre compris entre 38 et 52 dtex, de préférence entre 40 et 48 dtex. Une réalisation préférée consiste alors à ce que les fils de chaîne 7 et de trame 8 présentent des titres respectifs égaux à 22 dtex et à 33 dtex.

En raison de la dissymétrie des titres des fils de chaîne 7 et des fils de trame 8, le comportement mécanique du tissu 6 présente une dissymétrie selon la direction de sa sollicitation : la résistance des fils de trame 8, autrement dit la du tissu 6 selon la direction latérale L de la voile 2, est plus grande que celle des fils de chaîne 7, autrement dit plus grande que celle du tissu selon la direction antéro-postérieure AP. En fait, cette anisotropie des résistances mécaniques du tissu 6 « se calque » sur l'intensité des contraintes constatées que subit la pièce 5 de la voile 2 lorsque cette dernière est en service : en effet, lorsque la voile 2 est en vol, ces pièces 5 subissent des contraintes significativement plus fortes suivant la direction latérale L que suivant la direction antéro-postérieure AP, étant entendu que les contraintes de service constatées dans la pratique restent éloignées des valeurs limites de résistance à la rupture, pour des raisons de sécurité évidentes. Cette répartition dissymétrique des contraintes de service au sein de l'intrados 2A et de l'extrados 2B serait liée à sa forme voutée vers le bas, à la façon d'un U retourné, bien visible sur la figure 1. Quant aux parois inter-caissons 4, chacune d'elles subit, en service, une contrainte la plus importante dans le prolongement des suspentes 3, avec une composante selon la direction latérale L bien plus grande que sa composante selon la direction antéro-postérieure AP, en raison de la reprise des efforts de l'intrados par l'extrados.

De la sorte, en ajustant le niveau de résistance mécanique des fils de chaîne 7 aux besoins réels de la voile 2 majorés d'un coefficient de sécurité, comparativement aux fils de trame 8, on réduit le poids d'ensemble de chaque pièce 5 et, par là, de la voile 2. Pour autant, en conditions normales d'utilisation, les risques de déchirure de cette voile sont identiques à ceux d'une voile classique dont le tissu des pièces constitutives est formé de fils de chaîne et de trame individuellement identiques les uns aux autres. La durabilité de la voile 2 est ainsi similaire à celle de la voile classique précitée. Plus généralement, les propriétés fonctionnelles, telles que la résistance à la déchirure, la porosité, etc., sont avantageusement conservées.

Selon une seconde forme de réalisation envisageable pour le tissu 6 de la voile 2, les fils de chaîne 7 et de trame 8 sont respectivement réalisés avec des matériaux différents, le cas échéant en présentant des titres égaux, dans la mesure où les deux matériaux choisis sont tels que la résistance d'au moins certains des fils de trame 8 est plus grande que celle de chaque fil de chaîne 7. En pratique, les matériaux sont avantageusement choisis parmi ceux cités plus haut. De manière préférée, la dissymétrie de ces résistances se retrouve avec la même proportion que celle obtenue avec la première forme de réalisation décrite plus haut, à savoir que la résistance des fils de trame 8 est supérieure de 10%, de préférence de 25%, à celle des fils de chaîne 7.

Selon un second mode de réalisation du tissu 6 de la voile 2, l'anisotropie des résistances de ce tissu est obtenue en prévoyant une densité des fils de trame 8 plus grande que celle des fils de chaîne 7. Autrement dit, dans ce cas, les fils de trame 8 et de chaîne 7 peuvent être individuellement identiques, mais le nombre des fils de trame, par unité de longueur et perpendiculairement à ces derniers, est strictement supérieur au nombre de fils de chaîne.

A titre d'exemples de réalisation, pour des fils de trame 8 et de chaîne 7 présentant tous un titre de 33 dtex, le nombre de fils de trame 8 est compris entre 35 et 55 fils/cm, de préférence 40 à 45 fils/cm, tandis que le nombre de fils de chaîne 7 est compris entre 30 et 50 fils/cm. De manière plus générale, l'anisotropie des densités du tissu 6 fournit des différences de résistance, selon les fils de trame 8 et selon les fils de chaîne 7, du même ordre de grandeur que ceux évoqués plus haut, à savoir d'au moins 10%, voire d'au moins 25%, en plus dans le sens trame.

Bien entendu, il est déconseillé d'atteindre des niveaux de densité de fils trop faibles : le pouvoir couvrant des fils risque alors de ne plus être garanti.

Avantageusement, ce second mode de réalisation peut être combiné avec le premier mode de réalisation.

Divers aménagements et variantes à la voile 2 décrite jusqu'ici sont par ailleurs envisageables :
- Plutôt que d'assembler les pièces 5 du tissu 6 de manière que les fils de chaîne 7 et de trame 8 s'étendent de manière parallèle respectivement aux directions antéro-postérieure AP et latérale L de la voile 2, on peut prévoir d'utiliser au moins certaines pièces de tissu de manière que leurs fils de trame s'étendent selon la direction antéro-postérieure AP et que leurs fils de chaîne s'étendent selon la direction latérale L de la voile : bien entendu, dans ce cas, ce sont les fils de chaîne qui sont utilisés de sorte qu'ils soient plus résistants à la rupture que les fils de trame.
- Suivant une possibilité de réalisation de l'invention, le tissu 6 est enduit. Il est enduit sur une face ou sur ses deux faces. Il est de préférence enduit sur ses deux faces. L'enduction peut être réalisée à l'aide des matériaux couramment utilisés pour l'enduction de tissu employés dans les applications type parachute, parapente, spinnaker, kite-surf, etc. Ces matériaux une fois polymérisés ou réticulés ont les propriétés d'accroche au tissu et d'élasticité adaptées à ces applications. Parmi les matériaux préférés, on citera les matériaux silicone, le polyuréthane, l'acrylique et le polyester. En variante de l'enduction, des films en polyester, polyuréthane ou polyoléfine peuvent être contre-collés sur le tissu.

- A titre optionnel, les filaments constituant les fils de chaîne ou de trame sont étalés, pour s'étendre sensiblement dans un même plan. L'étalement des filaments peut être réalisé par tout moyen, notamment par calandrage. Dans le cas où une enduction est prévue, l'étalement précède l'enduction. L'étalement est réalisé de préférence sur un tissu dépourvu d'ensimage et avantageusement thermofixé de manière usuelle. Suivant un mode de réalisation, le tissu est nettoyé pour éliminer l'ensimage, il est ensuite thermofixé, puis on effectue l'étalement. De préférence, l'étalement est effectué par calandrage : l'efficacité du calandrage, ou de toute autre procédure d'étalement, peut aisément être contrôlée par microscopie optique, numérique ou électronique, avec un grossissement adapté. Ceci permet à l'homme du métier de régler les paramètres d'étalement en fonction du tissu, afin d'obtenir un étalement optimum, se traduisant par le fait que les filaments sont substantiellement dans le même plan. Pour un tissu non enduit, le calandrage peut être effectué en présence d'un agent glissant, tandis que, pour un tissu enduit, ce n'est pas nécessaire. A titre d'exemples numériques non limitatifs :
   - le nombre de filaments par fil de titre 22 dtex est compris entre 1 et 22, de préférence entre 5 et 15,
   - le nombre de filaments par fil de titre 33 dtex est compris entre 1 et 33, de préférence entre 8 et 18,
   - le nombre de filaments par fil de titre 44 dtex est compris entre 1 et 44, de préférence entre 20 et 35, et
   - le nombre de filaments par fil de titre 50 dtex est compris entre 1 et 50, de préférence entre 10 et 20.

Par ailleurs, bien que la mise en oeuvre de l'invention a été décrite jusqu'ici dans le domaine des parapentes, l'invention s'applique à d'autres équipements volants, munis d'une ou de plusieurs voiles qui, en service, subissent des contraintes mécaniques analogues à celles décrites plus haut pour la voile 2 du parapente 1.

## Revendications

1. Voile de vol, telle qu'une voile de parapente (2), comprenant un tissu (6) formé de fils de chaîne (7) et de trame (8) continus, dans laquelle, lorsque la voile est en vol, les projections, dans un plan horizontal, de premiers fils (7) que sont soit les fils de chaîne, soit les fils de trame, s'étendent parallèlement à la direction antéro-postérieure (AP) de la voile tandis que les projections, dans le plan horizontal, des seconds fils (8) que sont respectivement soit les fils de trame, soit les fils de chaîne, s'étendent parallèlement à la direction latérale (L) de la voile, **caractérisée en ce que** la résistance à la déformation du tissu selon ses seconds fils est plus élevée que celle du tissu selon ses premiers fils.

2. Voile suivant la revendication 1, **caractérisée en ce que** la résistance à la déformation du tissu (6) selon ses seconds fils (8) est supérieure de 10%, de préférence 25%, à celle du tissu selon ses premiers fils (7).

3. Voile suivant la revendication 2, **caractérisée en ce que** les premiers (7) et seconds (8) fils sont réalisés avec le même matériau, et **en ce que** le titre d'au moins certains des seconds fils (8) est strictement supérieur à celui de chaque premier fil (7).

4. Voile suivant la revendication 3, **caractérisée en ce que** les titres des seconds fils (8) et des premiers fils (7) sont respectivement compris entre 30 dtex et 36 dtex, et entre 19 dtex et 26 dtex.

5. Voile suivant la revendication 4, **caractérisée en ce que** les titres respectifs des seconds fils (8) et des premiers fils (7) sont égaux à 33 dtex et 22 dtex.

6. Voile suivant l'une quelconque des revendications 1 à 5, **caractérisée en ce que** les premiers (7) et seconds (8) fils sont respectivement réalisés en des matériaux différents.

7. Voile suivant l'une quelconque des revendications précédentes, **caractérisée en ce que** le nombre des seconds fils (8) du tissu (6) est strictement supérieur au nombre des premiers fils (7).

8. Voile suivant la revendication 7, **caractérisé en ce que**, pour des premiers (7) et seconds (8) fils réalisés avec le même matériau et présentant le même titre, le nombre des seconds fils (8) est compris entre 35 et 55 fils/cm tandis que le nombre des premiers fils (7) est compris entre 30 et 50 fils/cm.

9. Parapente (1) comprenant une voile (2) conforme à l'une quelconque des revendications précédentes.

## Patentansprüche

1. Flugschirm, wie ein Gleitschirm (2), der ein aus kontinuierlichen Kettfäden (7) und Schussfäden (8) gebildetes Gewebe (6) umfasst, bei dem während des Fluges des Schirms die Projektionen von ersten Fäden (7), die sowohl Kettfäden als auch Schussfäden sein können, auf eine horizontale Ebene sich parallel zu der Richtung Vorderseite-Rückseite (AP) des Schirms erstrecken, während die Projektionen der zweiten Fäden (8), die jeweils sowohl die Schussfäden als auch die Kettfäden sein können, auf die horizontale Ebene sich parallel zu der Seitenrichtung (L) des Schirms erstrecken, **dadurch gekennzeichnet, dass** die Verformungsfestigkeit des Gewebes gemäß seinen zweiten Fäden höher ist als die des Gewebes gemäß seinen ersten Fäden.

2. Schirm nach Anspruch 1, **dadurch gekennzeichnet, dass** Verformungsfestigkeit des Gewebes (6) gemäß seinen zweiten Fäden (8) um 10%, vorzugsweise 25% höher ist als die des Gewebes gemäß seinen ersten Fäden (7).

3. Schirm nach Anspruch 2, **dadurch gekennzeichnet, dass** die ersten (7) und zweiten (8) Fäden aus demselben Material bestehen und dass der Titer mindestens bestimmter zweiter Fäden (8) streng größer ist als der jedes ersten Fadens (7).

4. Schirm nach Anspruch 3, **dadurch gekennzeichnet, dass** die Titer der zweiten Fäden (8) und der ersten Fäden (7) jeweils zwischen 30 dtex und 36 dtex und zwischen 19 dtex und 26 dtex liegen.

5. Schirm nach Anspruch 4, **dadurch gekennzeichnet, dass** die jeweiligen Titer der zweiten Fäden (8) und der ersten Fäden (7) gleich 33 dtex und 22 dtex sind.

6. Schirm nach einem beliebigen der Ansprüche 1 bis 5, **dadurch gekennzeichnet, dass** die ersten (7) und zweiten (8) Fäden jeweils aus unterschiedlichen Materialien hergestellt sind.

7. Schirm nach einem beliebigen der vorhergehenden Ansprüche, **dadurch gekennzeichnet, dass** die Anzahl der zweiten Fäden (8) des Gewebes (6) streng größer ist als die Anzahl der ersten Fäden (7).

8. Schirm nach Anspruch 7, **dadurch gekennzeichnet, dass** für die ersten (7) und zweiten (8) Fäden, die aus demselben Material hergestellt sind und denselben Titer aufweisen, die Anzahl der zweiten Fäden (8) zwischen 35 und 55 Fäden/cm liegt, während Anzahl der ersten Fäden (7) zwischen 30 und 50 Fäden/cm liegt.

9. Gleitschirm (1), der einen Schirm (2) entsprechend einem beliebigen der vorhergehenden Ansprüche umfasst.

## Claims

1. A flight sail, such as a paraglider sail (2), comprising a fabric (6) made of continuous warp (7) and weft (8) yarns, wherein, when the sail is in flight, the projections, in a horizontal plane, of first yarns (7), which are either warp yarns or weft yarns, extend parallel to the anteroposterior direction (AP) of the sail, while the projections, in the horizontal plane, of the second yarns (8), which are either the weft yarns or the warp yarns, extend parallel to the lateral direction (L) of the sail,
**characterized in that** the resistance to deformation of the fabric along the second yarns thereof is higher than that of the fabric along the first yarns thereof.

2. The sail according to claim 1, **characterized in that** the resistance to deformation of the fabric (6) along the second yarns (8) thereof is greater by 10%, preferably 25%, than that of a fabric along its first yarns (7).

3. The sail according to claim 2, **characterized in that** the first (7) and second (8) yarns are made with the same material, and **in that** the count of at least some of the second yarns (8) is strictly greater than that of each first yarn (7).

4. The sail according to claim 3, **characterized in that** the counts of the second yarns (8) and first yarns (7) are respectively comprised between 30 dtex and 36 dtex, and between 19 dtex and 26 dtex.

5. The sail according to claim 4, **characterized in that** the respective counts of the second yarns (8) and first yarns (7) are equal to 33 dtex and 22 dtex.

6. The sail according to any one of claims 1 to 5, **characterized in that** the first (7) and second (8) yarns are respectively made from different materials.

7. The sail according to any one of the preceding claims, **characterized in that** the number of second yarns (8) of the fabric (6) is strictly greater than the number of first yarns (7).

8. The sail according to claim 7, **characterized in that**, for first (7) and second (8) yarns made from the same material and having the same count, the number of second yarns (8) is comprised between 35 and 55 yarns/cm while the number of first yarns (7) is comprised between 30 and 50 yarns/cm.

9. A paraglider (1) comprising a sail (2) according to any one of the preceding claims.
